# EUROPEAN PATENT APPLICATION

(11) **EP 4 131 756 A1**
(43) Date of publication of application: **08.02.2023**
(21) Application number: 21275103.6
(22) Date of filing: 03.08.2021
(51) Int. Cl.: H02M 1/32, H02M 1/36, H02M 7/483, H02M 1/00

(54) **IMPROVEMENTS IN OR RELATING TO CHAIN-LINK MODULES FOR VOLTAGE SOURCE CONVERTERS**

(71) Applicant: General Electric Technology GmbH, 5400 Baden (CH)
(72) Inventor: NOLAN,, Andrew, Stafford (GB); HORTON,, Patrick, Stafford (GB); OUTRAM,, John Lewis, Stafford (GB); BURNETT,, Alistair John, Stafford (GB); CHIVITE-ZABALZA,, Javier, Stafford (GB)
(74) Representative: Potter Clarkson

(57) **Abstract**

In the field of chain-link modules for voltage source converters, there is a need for an improved chain-link module. A chain-link module (50), for connection in series with other chain-link modules to form a chain-link converter selectively operable to provide a stepped variable voltage source within a voltage source converter, comprises a plurality of switching elements (52A, 52B) that are connected in parallel with an energy storage device (56), whereby the chain-link module (50) is selectively operable to provide a voltage source. The chain-link module (50) also includes a module controller (68) that requires energy to operate the chain-link module (50), and that is arranged to draw that energy from the energy storage device (56). In addition, the chain-link module (50) includes an energy discharge element (70) which is switchable into and out of circuit with the energy storage device (56) to selectively remove energy therefrom. The configuration of the chain-link module (50) limits the energy discharge paths available to the energy storage device (56) to:
a first energy discharge path (88) via the plurality of switching elements (52A, 52B);
a second energy discharge path (90) via the module controller (68); and
a third energy discharge path (92) via the switchable energy discharge element (70).

## Description

This invention relates to a chain-link module, for connection in series with other chain-link modules to form a chain-link converter selectively operable to provide a stepped variable voltage source within a voltage source converter, and to a said voltage source converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks

The conversion between DC power and AC power is utilized where it is necessary to interconnect DC and AC networks. In any such power transmission network, converters (i.e. power converters) are required at each interface between AC and DC power to affect the required conversion from AC to DC or from DC to AC.

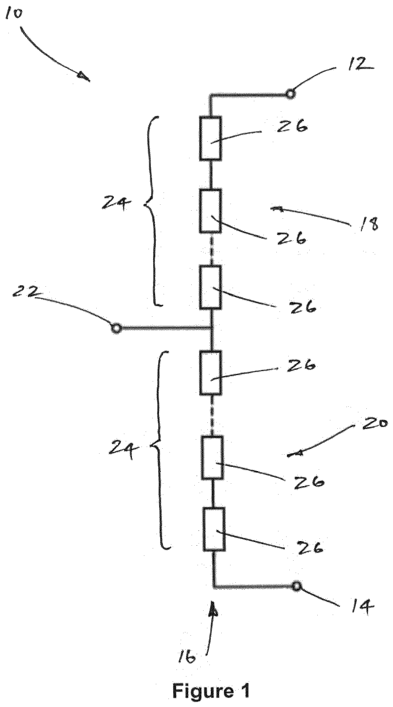

One type of power converter is a voltage source converter 10, as shown schematically in Figure 1, although other types of power converter are also possible.

The voltage source converter 10 includes first and second DC terminals 12, 14, between which extends a converter limb 16. Other voltage source converters may include more than one converter limb and, in particular, may include three converter limbs each of which corresponds to a given phase of a three-phase electrical power system.

The converter limb 16 includes first and second limb portions 18, 20 which are separated by an AC terminal 22.

In use the first and second DC terminals 12, 14 are connected to a DC network, and the AC terminal 22 is connected to an AC network.

Each limb portion 18, 20 includes a chain-link converter 24 which extends between the AC terminal 22 and a corresponding one of the first or the second DC terminal 12, 14. Each chain-link converter 24 includes a plurality of series connected chain-link modules 26.

Each chain-link module 26 includes a number of switching elements 28 which are connected in parallel with an energy storage device 30 in the form of a capacitor 32. Other types of energy storage device 30, i.e. any device that is capable of storing and releasing energy to selectively provide a voltage, e.g. a fuel cell or battery, may also be used however.

Each switching element 28 includes a semiconductor device 34, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices 34 may instead include a wide-bandgap material such as, but not limited to, silicon carbide, boron nitride, gallium nitride and aluminium nitride.

The number of semiconductor devices 34 in each switching element 28 may vary depending on the required voltage and current ratings of that switching element 28.

Each of the switching elements 28 also includes a passive current check element that is connected in anti-parallel with a corresponding semiconductor device 34. The or each passive current check element may include at least one passive current check device. The or each passive current check device may be any device that is capable of limiting current flow in only one direction, e.g. a diode 36. The number of passive current check devices in each passive current check element may vary depending on the required voltage and current ratings of that passive current check element.

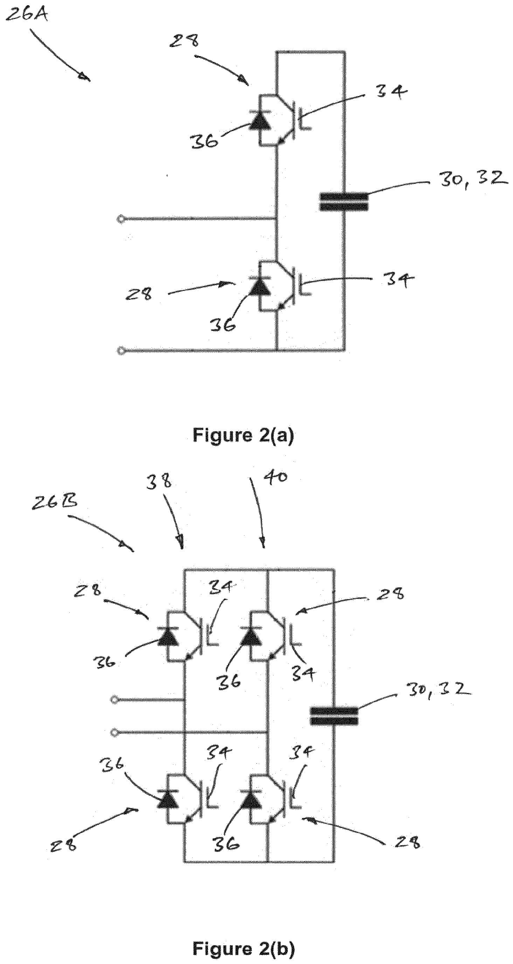

Figure 2(a) shows a schematic view of a first exemplary chain-link module 26A in which a first pair 38 of switching elements 28 is connected in parallel with a capacitor 32 in a known half-bridge arrangement to define a 2-quadrant unipolar module. Switching of the switching elements 28 selectively directs current through the capacitor 32 or causes current to bypass the capacitor 32, such that the first exemplary chain-link module 26A can provide zero or positive voltage and can conduct current in two directions.

Figure 2(b) shows a schematic view of a second exemplary chain-link module 26B in which first and second pairs 38, 40 of switching elements 28 and a capacitor 32 are connected in a known full bridge arrangement to define a 4-quadrant bipolar module. In a similar manner to the first exemplary chain-link module 26A, switching of the switching elements 28 again selectively directs current through the capacitor 32 or causes current to bypass the capacitor 32 such that the second exemplary chain-link module 26B can provide zero, positive or negative voltage and can conduct current in two directions.

Each chain-link converter 24 may include solely first exemplary chain-link modules 26A, solely second exemplary chain-link modules 26B, or a combination of first and second exemplary chain-link modules 26A, 26B.

In any event, the provision of a plurality of chain-link modules 26A, 26B means that it is possible to build up a combined voltage across each chain-link converter 24, via the insertion of the energy storage devices, i.e. the capacitors 32, of multiple chain-link modules 26A, 26B (with each chain-link module 26A, 26B providing its own voltage), which is higher than the voltage available from each individual chain-link module 26A, 26B.

Accordingly, each of the chain-link modules 26A, 26B work together to permit the chain-link converter 24 to provide a stepped variable voltage source. This permits the generation of a voltage waveform across each chain-link converter 24 using a step-wise approximation. As such each chain-link converter is capable of providing a wide range of complex waveforms.

For example, operation of each chain-link converter 24 in the foregoing manner can be used to generate an AC voltage waveform at the AC terminal 22, and thereby enable the voltage source converter 10 to provide the aforementioned power transfer functionality between the AC and DC networks.

According to a first aspect of the invention there is provided a chain-link module, for connection in series with other chain-link modules to form a chain-link converter selectively operable to provide a stepped variable voltage source within a voltage source converter, the chain-link module comprising:
a plurality of switching elements connected in parallel with an energy storage device whereby the chain-link module is selectively operable to provide a voltage source;
a module controller requiring energy to operate the chain-link module and arranged to draw that energy from the energy storage device; and
an energy discharge element switchable into and out of circuit with the energy storage device to selectively remove energy therefrom,
the configuration of the chain-link module limiting the energy discharge paths available to the energy storage device to:
   a first energy discharge path via the plurality of switching elements;
   a second energy discharge path via the module controller; and
   a third energy discharge path via the switchable energy discharge element.

Limiting the manner in which energy can be removed from the energy storage device to solely the three energy discharge paths recited above, two of which are switchable, i.e. two of which only operate selectively when desired, provides the option of having only the module controller remove energy from the energy storage device, i.e. the option of having the energy storage device discharge energy solely through the second energy discharge path, and thereby solely via the module controller.

This, in turn, is beneficial because the module controller typically draws only a small amount of energy while operating, certainly considerably less energy than a conventional bleed resistor (that might otherwise be connected directly in parallel with the energy storage device to mitigate a potentially lethal shock hazard presented by the chain-link module following shut down of a voltage source converter in which the chain-link module is, in use, located).

Drawing a smaller amount of energy from the energy storage device means that the energy storage device discharges at a slower rate, and so the total time taken for the energy storage device to discharge completely is extended. Hence the available time over which the module controller remains operational is advantageously extended also. This is desirable, not least because it makes uploading and installing of new module controller firmware easier since there is more time available for verifying the state of a reprogrammed chain-link module and for retries at programming where necessary.

In addition, limiting the available discharge paths as aforesaid, specifically omits the need for a conventional bleed resistor which avoids the not inconsiderable attendant capital cost and ongoing associated energy losses during operation.

Preferably the module controller is arranged to, in use, receive instructions from a converter controller programmed to control a voltage source converter within which the chain-link module is, in use, located,
the module controller being additionally programmed to selectively operate the chain-link module in one or other of a first mode and a second mode,
the module controller operating the chain-link module in the first mode while the voltage source converter is in a normal operating cycle, the first mode being a conducting mode in which the chain-link module alternatively provides a voltage source or is bypassed within the said voltage source converter, and
the module controller operating the chain-link module in the second mode following initiation of a voltage source converter shutdown procedure after which the said voltage source converter enters a discharge cycle, the second mode being a shutdown mode in which all of the plurality of switching elements are at least initially turned off.

Arranging the module controller to, in use, receive instructions from a converter controller in the aforementioned manner, desirably permits operation of the chain-link module in different modes according to the operating characteristic of the voltage source converter within which it is, in use, located. This, in turn, allows such operating modes of the chain-link module to reflect and be optimised in relation to the operating characteristic of the voltage source converter. For example, it may on occasion be necessary to initiate a converter shutdown procedure, e.g. following a fault event, and thereafter operate the chain-link module in a particular way, i.e. in the said second shutdown mode in which the majority of chain-link modules are blocked, i.e. turned off.

Optionally the module controller is programmed, while the chain-link module is operating in the second shutdown mode, to test for one or more damaged components within the chain-link module.

The module controller may test for one or more damaged components by:
sequentially turning on each switching element to selectively insert the energy storage device into circuit within an associated voltage source converter; and
monitoring the outcome of such turning on.

The aforementioned ability to test for one or more damaged components is advantageous because if one or more of the components fails, e.g. during a fault event, this might not otherwise be detected. If the damage is not detected the chain-link module could fail to energise during energisation of an associated voltage source converter, thereby leaving the chain-link module unprotected. Then, when the voltage source converter is de-blocked, i.e. when one or more switching elements within individual chain-link modules therein is turned on, an arcflash could occur across components of the chain-link module leading to a fire which is highly undesirable.

In a preferred embodiment of the invention the module controller is programmed, while the chain-link module is operating in either the first conducting mode or the second shutdown mode, to cause the energy storage device to discharge energy solely through the second energy discharge path.

A module controller, so programmed to cause energy storage device to discharge energy solely through the second energy discharge path, is advantageous because, as indicated above, discharging via the module controller results in a slow rate of energy discharge from the energy storage device which, as set out below, provides for further benefits in accordance with other features of the invention.

Preferably the module controller is programmed, while the chain-link module is operating in the second shutdown mode, to cause the energy storage device to discharge energy alternatively through the second energy discharge path and through the third energy discharge path.

Having the module controller so programmed, allows for selective discharging of significant amounts of energy from the energy storage device through the third energy discharge path, i.e. via the energy discharge element, more quickly than is possible through the second energy discharge path, i.e. via the module controller. Such quicker energy discharge facilitates the overall aim of completing the discharge cycle for a whole voltage source converter.

The module controller may be programmed to check operation of the switchable energy discharge element while causing the energy storage device to discharge energy through the third energy discharge path and thereby via the said switchable energy discharge element.

Such checking is desirable since it helps to ensure that the chain-link module as a whole is functioning correctly.

Optionally the module controller is programmed, while the energy storage device is discharging energy through either the second or third energy discharge path, to check for unwanted current leakage through one or more components of the chain-link module.

According to another preferred embodiment of the invention the module controller is further programmed to measure any detected current leakage.

The module controller may be programmed, while the energy storage device is discharging energy through either the second or third energy discharge path, to monitor an energy discharge characteristic of one or more components of the chain-link module.

As indicated above, discharging the energy storage device through the second energy discharge path, i.e. via the module controller, leads to a slower rate of energy discharge which, in the context of checking for unwanted current leakage and/or monitoring energy discharge characteristics, allows for much more accurate checking and/or monitoring.

Meanwhile, causing the energy storage device to discharge through the different second and third energy discharge paths, i.e. via the module controller and via the energy discharge element, means that it is possible to use one chain-link module component to validate another.

For example, if the energy storage device discharges faster than expected when dissipating energy through each of the second and third energy discharge paths, this would suggest that the level of energy stored by the energy storage device is low. In contrast, if the energy storage device discharged as expected when discharging through the third energy discharge path, i.e. via the energy discharge element, but discharged more quickly than expected when doing so through the second energy discharge path, i.e. via the module controller, then it might be suspected that the module controller, e.g. a power supply unit therein, is drawing excessive energy, i.e. current, from the energy storage device.

Preferably the module controller is programmed to record one or both of any measured current leakage and a monitored energy discharge characteristic.

Such recording provides the option of looking for changes in either of the aforementioned parameters of the chain-link module, e.g. as an indicator of chain-link module health.

In addition, comparing these recorded parameters with other data, e.g. the in-service time to date of the chain-link module, provides an opportunity to predict the remaining useful life of the chain-link module.

According to a further preferred embodiment of the invention, the module controller is programmed to cause the energy storage device to discharge alternatively through the second and third energy discharge paths following one or more of:
testing for a damaged component;
checking for unwanted current leakage; and
monitoring an energy discharge characteristic.

Having a module controller programmed to delay causing the energy storage device to discharge alternatively through the second and third energy discharge paths, and thereby significantly deplete the energy stored by the energy storage device, until testing for damaged switching elements has taken place, helps to ensure that the level of energy stored is sufficient to make any damage readily apparent.

In the meantime, having a module controller so programmed, i.e. to delay depleting the energy stored by the energy storage device until one or more of the aforementioned checking or monitoring activities has taken place, similarly helps to ensure that such checking and monitoring is done under conditions when it can be done so most accurately.

Optionally the module controller is programmed to monitor its energy discharge characteristic while the energy storage device is discharging energy solely through the second energy discharge path following a desired period of the energy storage device discharging energy alternately through the second and third energy discharge paths.

Programming the module controller in the foregoing manner provides the option of monitoring the discharge performance, i.e. the energy drain, of the module controller when only a very small amount of energy remains in the energy storage device, i.e. very shortly before the voltage source converter discharge cycle completes and the chain-link module itself shuts down because its energy supply is exhausted and thereafter it ceases all communication.

Optionally the module controller is programmed, after monitoring its energy discharge characteristic following a desired period of the energy storage device discharging energy alternately through the second and third energy discharge paths, to cause the energy storage device to discharge solely through the third energy discharge path.

Programming the module controller in the foregoing manner helps to ensure the rapid and complete discharge of the energy storage device, once all desired testing, checking and monitoring has been carried out, in order to conclude the discharge cycle of the associated voltage source converter within which the chain-link module is, in use, located.

According to a second aspect of the invention there is provided a voltage source converter comprising at least one chain-link converter having a plurality of series-connected chain-link modules, at least one of the said chain-link modules being a chain-link module according to any preceding claim.

The voltage source converter of the invention shares the benefits of the corresponding features of the chain-link module of the invention.

It will be appreciated that the use of the terms "first" and "second", and the like, in this patent specification is merely intended to help distinguish between similar features (e.g. the first, second and third energy discharge paths), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of non-limiting example, with reference being made to the following figures in which:
Figure 1 shows a known voltage source converter;
Figure 2(a) shows a schematic view of a first exemplary chain-link module which optionally may form a part of the known voltage source converter;
Figure 2(b) shows a schematic view of a second exemplary chain-link module which optionally may form a part of the known voltage source converter;
Figure 3 shows a chain-link module according to a first embodiment of the invention; and
Figure 4 illustrates how the chain-link module shown in Figure 3 is controlled to operate during various operating cycles of a voltage source converter in which it is, in use, located.

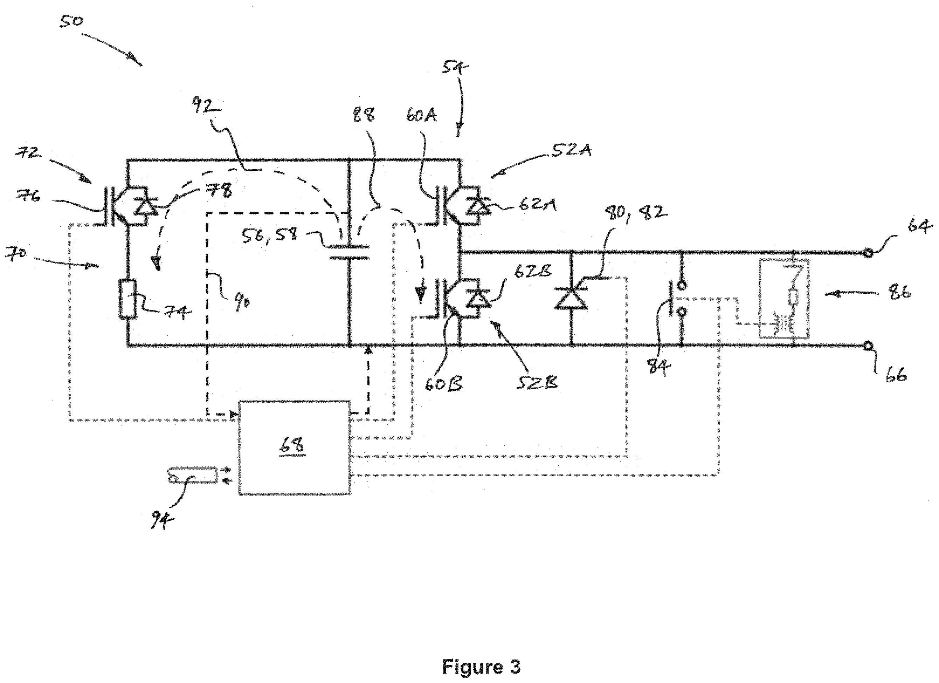

A chain-link module according to a first embodiment of the invention is designated generally by reference numeral 50, as shown in Figure 3.

The first chain-link module 50 is for connection in series with other chain-link modules to form a chain-link converter (not shown) that is operable to provide a stepped variable voltage source within a voltage source converter, in a manner known in the art. The said other chain-link modules with which the first chain-link module 50 may be connected in series, may be one or more identical first chain-link modules 50, one or more alternative first chain-link modules (not shown), one or more conventional half-bridge or full bridge chain-link modules 26A, 26B generally as shown in Figures 2(a) and 2(b), or any combination thereof.

The first chain-link module 50 includes a plurality of switching elements 52, and more particularly a first pair 54 of first and second switching elements 52A, 52B, that are connected in parallel with an energy storage device 56 in the form of a capacitor 58.

The first switching element 52A includes a first semiconductor device, in the form of a first IGBT 60A, which is connected in parallel with a first anti-parallel diode 62A, while the second switching element 52B includes a second semiconductor device, in the form of a second IGBT 60B, which is connected in parallel with a second anti-parallel diode 62B. In other embodiments of the invention, however, different forms of semiconductor device and/or passive current check element may be used.

The first and second switching elements 52A, 52B are connected in parallel with the capacitor 58 in a known half-bridge arrangement, and hence define a 2-quadrant unipolar module which can provide zero or positive voltage, i.e. across first and second module terminals 64, 66, and can conduct current in two directions.

An alternative first chain-link module (not shown) may include first and second pairs of switching elements and a capacitor that are connected in a known full bridge arrangement to define a 4-quadrant bipolar module, which can provide a zero, positive or negative voltage across similar first and second module terminals, and can conduct current in two directions.

In any event, the first chain-link module 50 additionally includes a module controller 68 which requires energy to allow it to function and thereby operate the first chain-link module 50. The module controller 68 is arranged to draw the energy it needs from the energy storage device 56, i.e. from the capacitor 58, within the said first chain-link module 50.

The first chain-link module 50 also includes an energy discharge element 70 that is switchable into and out of circuit with the energy storage device 56, i.e. with the capacitor 58, to selectively remove energy therefrom.

In the embodiment shown the energy discharge element 70 is formed from a discharge switch 72 connected in series with a discharge resistor 74. The discharge switch 72 preferably includes a discharge IGBT 76 arranged in parallel with a discharge anti-parallel diode 78, but other types of switch, indeed other types of semiconductor device, with or without an anti-parallel diode, may be used instead.

The first chain-link module 50 optionally further includes a bypass element 80, in the form of a bypass thyristor 82, and a bypass switch 84, both of which are connected across the first and second module terminals 64, 66. Other forms of bypass element may be used as an alternative, provided they also afford the first chain-link module 50 with a desired degree of electrical protection. In any event, however, preferably the bypass element 80 is controlled by the module controller 68.

Meanwhile the bypass switch 84 preferably can be activated, as needed, by either the module controller 68 or a separate trip assembly 86.

In addition to the foregoing, the configuration of the first chain-link module 50 limits the energy discharge paths available to the energy storage device 56, i.e. available to the capacitor 58, to only the following:
a first energy discharge path 88 via the plurality of switching elements 52A, 52B;
a second energy discharge path 90 via the module controller 68; and
a third energy discharge path 92 via the switchable energy discharge element 70.

No other energy discharge paths are provided, e.g. by other components and/or elements of the first chain-link module 50, and so the capacitor 58 is able to discharge energy only by one of the said first, second or third energy discharge paths 88, 90, 92.

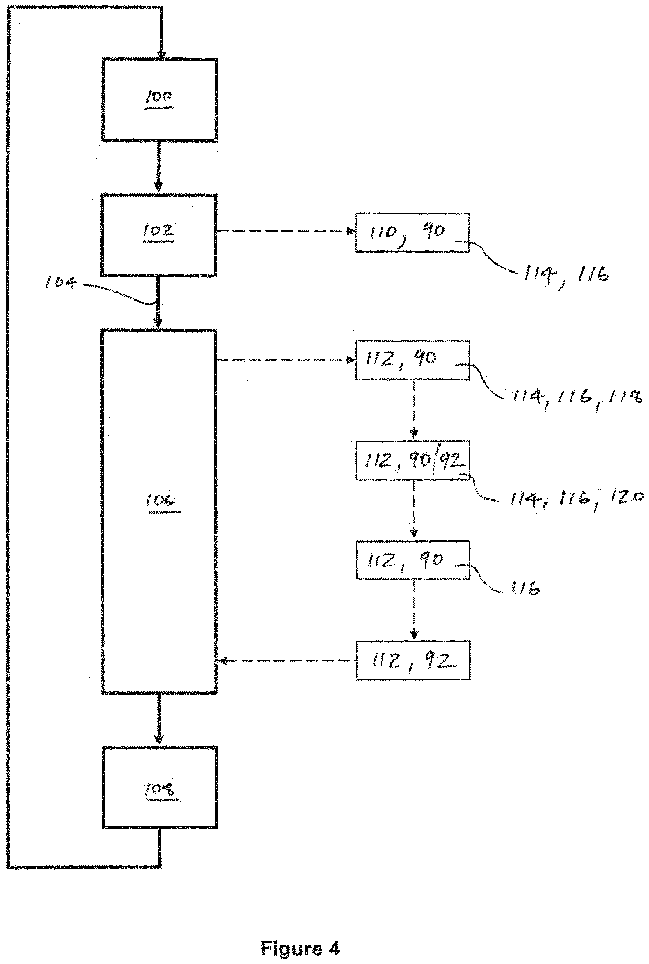

The module controller 68 is arranged to, in use, receive, e.g. via a communication link 94 such as a passive optical network, instructions from a converter controller (not shown) that is programmed to control a voltage source converter (also not shown) within which the chain-link module 50 is, in use, located. More particularly, the converter controller controls the voltage source converter through various different operating cycles, as shown schematically in Figure 4.

To initiate operation of the voltage source converter and ready it to provide normal service, the converter controller must first control the voltage source converter through an energising cycle 100 during which each energy storage device, i.e. each capacitor 58, in the or each first chain-link module 50 and the other chain-link modules within the said voltage source converter is charged to its normal operating voltage.

Following the energising cycle 100, the voltage source converter is ready for service and so is controlled by the converter controller to operate in a normal operating cycle 102. During such a normal operating cycle 102 the or each first chain-link module 50 and the other chain-link modules within the said voltage source converter selectively provide a voltage source, and thereby together provide the stepped variable voltage source necessary to enable the power transfer functionality of the voltage source converter.

In addition, it may be necessary, e.g. following a fault event, to have the converter controller initiate a shutdown procedure 104 after which the voltage source converter enters a discharge cycle 106.

Meanwhile, module controller 68 is additionally programmed, usually in response to instructions from the converter controller, to selectively operate the first chain-link module 50 in one or other of a first mode and a second mode 110, 112.

The module controller 68 operates the first chain-link module 50 in the first mode 110 while the voltage source converter is operating normally, i.e. while the voltage source converter is in its normal operating cycle 102 and the remaining chain-link modules are selectively providing a voltage source, as shown in Figure 4.

The first mode 110 is a conducting mode in which the first chain-link module 50 is alternatively bypassed within the said voltage source converter, e.g. by turning on only the second IGBT 60B within the first chain-link module 50, such that the chain-link module 50 provides zero output voltage, or the chain-link module 50 provides a positive voltage source by having only the first IGBT 60A within the first chain-link module 50 turned on.

The module controller 68 is programmed, while the first chain-link module 50 is operating in the first conducting mode 110, to cause the energy storage device 56, i.e. the corresponding capacitor 58, to discharge energy solely through the second energy discharge path 90, i.e. solely via the module controller 68 itself.

The module controller 68 draws only a relatively small amount of energy from the capacitor 58, and so the capacitor 58 discharges energy at a commensurately slow rate. This, in turn, helps to provide a good degree of accuracy when checking and monitoring one or more components within the said first chain-link module 50, as described in more detail hereinbelow.

More particularly, the module controller 68 is programmed, while the first chain-link module 50 is operating in the first conducting mode 110 and its energy storage device 56, i.e. its capacitor 58, is discharging energy solely through the second energy discharge path 90, to check 114 for unwanted current leakage through one or more components of the first chain-link module 50.

Components of particular interest from a possible current leakage perspective include, but are not limited to, one or both of the switching elements 52A, 52B, i.e. one or more of each IGBT 60A, 60B and each anti-parallel diode 62A, 62B, the energy storage device 56, i.e. the capacitor 58, the module controller 68, and the switchable energy discharge element 70.

Optionally the second energy discharge path 90 may be extended to include the bypass thyristor 82 and one of the switching elements 52A, i.e. the switching element 52A comprising the first IGBT 60A and the first anti-parallel diode 62A. Such an extension of the second energy discharge path 90 can be achieved by gating, i.e. turning on, the bypass thyristor 82 at the same time as switching on the said switching element 52A, i.e. turning on the first IGBT 60A.

In such circumstances, the module controller 68 draws more energy from the capacitor 58 because of a need to supply a gate current to the bypass thyristor 82, i.e. to turn the bypass thyristor 82 on, and so there will be more current consumed by the extended second energy discharge path 90. In addition, a significant reverse leakage current will flow through the extended portion of the second energy discharge path 90, i.e. the portion of the path through the switching element 52A and the bypass thyristor 82, and such a reverse leakage current would have a measurable effect on the discharge rate of the capacitor 58. In such a manner, i.e. the measurable effect on the discharge rate of the capacitor 58, the correct operating of the gating circuit of the bypass thyristor 82 can be confirmed.

In any event, the module controller 68 may be further programmed to measure any detected current leakage. This may be done, indirectly, by monitoring a reduction in voltage of the energy storage device 56, i.e. the capacitor 58.

In addition, the module controller 68 is programmed, again while the first chain-link module 50 is operating in the first conducting mode 110 and its capacitor 58 is discharging energy solely through the second energy discharge path 90, to monitor 116 an energy discharge characteristic of one or more components of the first chain-link module 50. In particular, the module controller 68 is so programmed to monitor 116 the energy discharge characteristic of one or both of the energy storage device 56, i.e. the capacitor 58, and the module controller 68. Such monitoring by the module controller 68 is preferably also reported back to the converter controller.

The module controller 68 is also programmed to record one or both of any measured current leakage and a monitored energy discharge characteristic.

Meanwhile, returning to the selective operation of the first chain-link module 50 in one or other of a first mode and a second mode 110, 112, the module controller 68 operates the first chain-link module 50 in the second mode 112 following initiation of a voltage source converter shutdown procedure 104, e.g. following a fault event, after which the voltage source converter within which the first chain-link module 50 is, in use, located enters a discharge cycle 106.

The second mode 112 is a shutdown mode in which all of the switching elements of the first chain-link module 50, i.e. both the first and second switching elements 52A, 52B, are turned off, at least initially, i.e. the chain-link module 50 is blocked.

The discharge cycle 106 of an associated voltage source converter starts when the majority of the chain-link modules therein, including the at least one first chain-link module 50, is controlled so that all of the plurality of switching elements in all of the chain-link modules are turned off such that the semiconductor devices therein, e.g. the IGBTs 60A, 60B therein, cease to conduct current, i.e. the majority of chain-link modules are blocked.

The discharge cycle 106 ends when the controller of each chain-link module, e.g. the module controller 68, ceases to operate because the energy supply from the corresponding energy storage device, e.g. the capacitor 58, is completely exhausted. At such a stage, i.e. when all energy storage devices are fully discharged, the voltage source converter is completely shutdown 108.

It is desirable, while the corresponding voltage source converter is in its discharge cycle 106 and the module controller 68 is operating the first chain-link module 50 in the second shutdown mode 112, to carry out various testing, checking and monitoring of one or more components within the first chain-link module 50, and so the module controller 68 is additionally programmed, preferably in response to instructions from the converter controller to ensure coordinated control of all chain-link modules, as described below.

Furthermore, at the start of a voltage source converter's discharge cycle 106, the module controller 68 is programmed to again cause the energy storage device 56 of the first chain-link module 50, i.e. the capacitor 58, to discharge energy solely through the second energy discharge path 90, i.e. solely via the module controller 68 itself. As mentioned above, the module controller 68 draws only a relatively small amount of energy from the capacitor 58, and so having the capacitor 58 discharge energy solely via the module controller 68 means that it does so at a commensurately slow rate. This, in turn, helps to provide a good degree of accuracy when carrying out the aforementioned testing, checking and monitoring of one or more components within the first chain-link module 50.

In terms of such testing, the module controller 68 is additionally programmed (while a corresponding voltage source converter is in its discharge cycle 106, the first chain-link module 50 is operating in the second shutdown mode 112, and the capacitor 58 is discharging energy solely through the second energy discharge path 90, i.e. solely via the module controller 68), to test 118 for one or more damaged components within the first chain-link module 50.

More particularly, the module controller 68 tests 118 for one or more damaged components by sequentially turning on each switching element 52A, 52B, i.e. turning on the corresponding first or second IGBT 60A, 60B, to selectively insert the energy storage device 56, i.e. the capacitor 58, into circuit within an associated voltage source converter; and monitoring the outcome of such turning on.

By way of example, in the event of either the bypass thyristor 82 or the second anti-parallel diode 62B becoming damaged and failing to a short circuit, e.g. following a fault event, turning on the first IGBT 60A and monitoring the outcome would detect the damage. This is because a high current, driven by the energy stored in the capacitor 58, would flow through the damaged component and cause desaturation of the first IGBT 60A.

Optionally, such high current flow could be estimated from an observed drop in the voltage level, i.e. stored energy level, of the capacitor 58.

The foregoing approach can similarly be used to test for damage to other components of the first chain-link module 50, noting that a healthy chain-link module 50 would not discharge when either of the first and second IGBTs 60A, 60B are switched on alone. It follows that switching on each in turn can be used to check the blocking capability of the other.

It should be noted that in relation to a corresponding voltage source converter, and the turning on of switching elements 52A, 52B in multiple first chain-link modules 50 potentially located therein to test for damaged components, such turning on of respective switching elements 52A, 52B, i.e. respective first and second IGBTs 60A, 60B, should be sequenced so that only a small number of such first chain-link modules 50 switched into circuit, at a time.

Meanwhile, as well as testing for one or more damaged components of the first chain-link module 50, the module controller 68 is further programmed (again while the corresponding voltage source converter is in its discharge cycle 106, the first chain-link module 50 is operating in the second shutdown mode 112, and the capacitor 58 is discharging energy solely through the second energy discharge path 90, i.e. solely via the module controller 68) to check 114 for unwanted current leakage through one or more components of the said first chain-link module 50.

Optionally the second energy discharge path 90 may be extended to include the bypass thyristor 82 and one of the switching elements 52A, i.e. the switching element 52A comprising the first IGBT 60A and the first anti-parallel diode 62A. As indicated above in connection with operation of the chain-link module 50 in the first, conducting mode 110, such an extension of the second energy discharge path 90 can be achieved by gating, i.e. turning on, the bypass thyristor 82 at the same time as switching on the said switching element 52A, i.e. turning on the first IGBT 60A.

In such circumstances, the module controller 68 again draws more energy from the capacitor 58 because of a need to supply a gate current to the bypass thyristor 82, i.e. to turn the bypass thyristor 82 on, and so there will be more current consumed by the extended second energy discharge path 90. In addition, a significant reverse leakage current will flow through the extended portion of the second energy discharge path 90, i.e. the portion of the path through the switching element 52A and the bypass thyristor 82, and such a reverse leakage current would have a measurable effect on the discharge rate of the capacitor 58. In such a manner, i.e. the measurable effect on the discharge rate of the capacitor 58, the correct operating of the gating circuit of the bypass thyristor 82 can be confirmed.

The module controller 68 is still further programmed to measure any detected current leakage.

Also (and again while the corresponding voltage source converter is in its discharge cycle 106, the first chain-link module 50 is operating in the second shutdown mode 112 in which the majority of chain-link modules are blocked, and the capacitor 58 is discharging energy solely through the second energy discharge path 90, i.e. solely via the module controller 68) the module controller 68 is yet further programmed to monitor 116 an energy discharge characteristic of one or more components of the first chain-link module 50. In particular, the module controller 68 is so programmed to monitor 116 the energy discharge characteristic of one or both of the energy storage device 56, i.e. the capacitor 58, and the module controller 68.

The module controller 68 is additionally programmed to record one or both of any measured current leakage and a monitored energy discharge characteristic.

As indicated, the module controller 68 is programmed so that all of the aforementioned testing, checking and monitoring of one or more components of the first chain-link module 50 takes place while a corresponding voltage source converter is in its discharge cycle 106, while the first chain-link module 50 is operating in the second shutdown mode 112 in which the majority of chain-link modules are blocked, and while the capacitor 58 is discharging energy solely through the second energy discharge path 90, i.e. solely via the module controller 68, with this latter criterion helping to ensure that a good degree of accuracy is possible when carrying out the testing, checking and monitoring activities.

In the preferred embodiment of first chain-link module 50 described herein, following such testing, checking and monitoring, while the capacitor 58 is discharging energy solely through the second energy discharge path 90, i.e. solely via the module controller 68 (and while a corresponding voltage source converter continues in its discharge cycle 106 and the first chain-link module 50 is operating in the second shutdown mode 112 in which the majority of chain-link modules are blocked), the module controller 68 is programmed to cause the energy storage device 56, i.e. the capacitor 58, to discharge energy alternatively through the second energy discharge path 90, i.e. via the module controller 68, and through the third energy discharge path 92, i.e. via the energy discharge element 70.

Such alternate discharging of energy through the third energy discharge path 92, i.e. via the energy discharge element 70, removes considerably more energy from the capacitor 58 than is drawn off by the module controller 68, and so helps to progress towards completion of the discharge cycle 106 of an associated voltage source converter within which the first chain-link module 50 is located.

In other embodiments of the invention the module controller is programmed to cause the energy storage device to discharge alternatively through the second and third energy discharge paths following only one or two of:
testing for damaged a damaged component;
checking for unwanted current leakage; and
monitoring an energy discharge characteristic.

In still further embodiments of the invention the module controller may be programmed to cause the energy storage device to discharge alternatively through the second and third energy discharge paths without first having carried out any testing, checking or monitoring of one or more components of the said first chain-link module.

In any event, preferably the discharge of energy alternatively through the second and third energy discharge paths 90, 92 is controlled, by the module controller 68, according to a defined pulse width modulation sequence.

Meanwhile, returning to the preferred embodiment described herein, with the energy storage device 56, i.e. capacitor 58, now discharging energy alternatively through the second and third energy discharge paths 90, 92, i.e. alternatively via the module controller 68 and the energy discharge element 70 (while a corresponding voltage source converter continues in its discharge cycle 106 and the first chain-link module 50 continues to operate in the second shutdown mode 112 in which the majority of chain-link modules are blocked), the module controller 68 is still further programmed to:
- check 114 for unwanted current leakage through one or more components of the said first chain-link module 50;
- to measure any detected current leakage;
- to monitor 116 an energy discharge characteristic of one or more components of the said first chain-link module 50; and
- record one or both of any measured current leakage and a monitored energy discharge characteristic.

The module controller 68 being so programmed to carry out the foregoing activities while energy is being discharged through each of the second energy discharge path 90 and the third energy discharge path 92, permits the results for one component to be used to validate the results for another component.

In addition, the module controller 68 is programmed to check operation 120 of the switchable energy discharge element 70 while the energy storage device 56, i.e. the capacitor 58, discharges energy through the third energy discharge path 92, i.e. via the said switchable energy discharge element 70.

Following a desired period of the energy storage device 56, i.e. the capacitor 58, discharging energy alternately through the second and third energy discharge paths 90, 92, e.g. when the remaining energy in the capacitor 58 is relatively low and it is desired to observe how the module controller 68 might operate under such conditions, the module controller 68 is programmed to monitor 116 its energy discharge characteristic while the energy storage device 56, i.e. capacitor 58, is discharging energy solely through the second energy discharge path 90, i.e. solely via the said module controller 68.

Thereafter, the module controller 68 is programmed to cause the energy storage device 56, i.e. the capacitor 58, to discharge solely through the third energy discharge path 92, i.e. solely via the energy discharge element 70. Such programming quickly dumps any remaining energy from the capacitor 58 and so contributes towards completing the associated voltage source converter's discharge cycle 106 and eventual complete shutdown 108.

It should be appreciated that in some embodiments of the invention, the extended discharge cycle of an associated voltage source converter (which is made possible by slowing the rate of energy discharge from one or more energy storage devices, i.e. capacitors, therein by directing the energy discharge through a second energy discharge path, i.e. via a corresponding module controller) might need to be interrupted and re-energising of the said voltage source converter carried out. In such embodiments of the invention the or each corresponding module controller is programmed in a manner that permits any of the aforementioned testing, checking or monitoring to be aborted and energising of the associated first chain-link module to be commenced.

Meanwhile, returning the described embodiment of first chain-link module 50, once all the remaining energy from the capacitor 58 has been discharged via a dump through the third energy discharge path 92, i.e. through the energy discharge element 70, the module controller 68 has no energy source, and so ceases to operate.

A voltage source converter according to a second embodiment of the invention (not shown) comprises at least one chain-link converter having a plurality of series-connected chain-link modules, at least one of the said chain-link modules being a first chain-link module 50, as described hereinabove.

## Claims

1. A chain-link module (50), for connection in series with other chain-link modules to form a chain-link converter selectively operable to provide a stepped variable voltage source within a voltage source converter, the chain-link module (50) comprising:
a plurality of switching elements (52A, 52B) connected in parallel with an energy storage device (56) whereby the chain-link module (50) is selectively operable to provide a voltage source;
a module controller (68) requiring energy to operate the chain-link module (50) and arranged to draw that energy from the energy storage device (56); and
an energy discharge element (70) switchable into and out of circuit with the energy storage device (70) to selectively remove energy therefrom,
the configuration of the chain-link module (50) limiting the energy discharge paths available to the energy storage device to:
a first energy discharge path (88) via the plurality of switching elements (52A, 52B);
a second energy discharge path (90) via the module controller (68); and
a third energy discharge path (92) via the switchable energy discharge element (70).

2. A chain-link module (50) according to Claim 1 wherein the module controller (68) is arranged to, in use, receive instructions from a converter controller programmed to control a voltage source converter within which the chain-link module (50) is, in use, located,
the module controller (68) being additionally programmed to selectively operate the chain-link module (50) in one or other of a first mode (110) and a second mode (112),
the module controller (68) operating the chain-link module (50) in the first mode (110) while the said voltage source converter is in a normal operating cycle (102), the first mode (110) being a conducting mode in which the chain-link module (50) alternatively provides a voltage source or is bypassed within the said voltage source converter, and
the module controller (68) operating the chain-link module (50) in the second mode following initiation of a voltage source converter shutdown procedure (104) after which the said voltage source converter enters a discharge cycle (106), the second mode (112) being a shutdown mode in which all of the plurality of switching elements (52A, 52B) are at least initially turned off.

3. A chain-link module (50) according to Claim 2 wherein the module controller (68) is programmed, while the chain-link module (50) is operating in the second shutdown mode (112), to test (118) for one or more damaged components within the chain-link module (50).

4. A chain-link module (50) according to Claim 3 wherein the module controller (68) tests for one or more damaged components by:
sequentially turning on each switching element (52A, 52B) to selectively insert the energy storage device (56) into circuit within an associated voltage source converter; and
monitoring the outcome of such turning on.

5. A chain-link module (50) according to any of Claims 2 to 4 wherein the module controller (68) is programmed, while the chain-link module (50) is operating in either the first conducting mode (110) or the second shutdown mode (112), to cause the energy storage device (56) to discharge energy solely through the second energy discharge path (90).

6. A chain-link module (50) according to any of Claims 2 to 4 wherein the module controller (68) is programmed, while the chain-link module (50) is operating in the second shutdown mode (112), to cause the energy storage device (56) to discharge energy alternatively through the second energy discharge path (90) and through the third energy discharge path (92).

7. A chain-link module (50) according to Claim 6 wherein the module controller (68) is programmed to check operation of the switchable energy discharge element (70) while causing the energy storage device (56) to discharge energy through the third energy discharge path (92) and thereby via the said switchable energy discharge element (70).

8. A chain-link module (50) according to any of Claims 5 to 7 wherein the module controller (68) is programmed, while the energy storage device (56) is discharging energy through either the second or third energy discharge path (90, 92), to check (114) for unwanted current leakage through one or more components of the chain-link module (50).

9. A chain-link module (50) according to Claim 8 wherein the module controller (68) is further programmed to measure any detected current leakage.

10. A chain-link module (50) according to any of Claims 5 to 9 wherein the module controller (68) is programmed, while the energy storage device (56) is discharging energy through either the second or third energy discharge path (90, 92), to monitor (116) an energy discharge characteristic of one or more components of the chain-link module (50).

11. A chain-link module (50) according to Claim 9 or Claim 10 wherein the module controller (68) is programmed to record one or both of any measured current leakage and a monitored energy discharge characteristic.

12. A chain-link module (50) according to either Claim 6 or Claim 7, and any claim dependent thereon, wherein the module controller (68) is programmed to cause the energy storage device (56) to discharge alternatively through the second and third energy discharge paths (90, 92) following one or more of:
testing (118) for a damaged component;
checking (114) for unwanted current leakage; and
monitoring (116) an energy discharge characteristic.

13. A chain-link module (50) according to Claim 10, or Claim 11 or Claim 12 when dependent on Claim 10, wherein the module controller (68) is programmed to monitor (116) its energy discharge characteristic while the energy storage device (56) is discharging energy solely through the second energy discharge path (90) following a desired period of the energy storage device (56) discharging energy alternately through the second and third energy discharge paths (90, 92).

14. A chain-link module (50) according to Claim 13 wherein the module controller (68) is programmed, after monitoring (116) its energy discharge characteristic following a desired period of the energy storage device (56) discharging energy alternately through the second and third energy discharge paths (90, 92), to cause the energy storage device (56) to discharge solely through the third energy discharge path (92).

15. A voltage source converter comprising at least one chain-link converter having a plurality of series-connected chain-link modules, at least one of the said chain-link modules being a chain-link module (50) according to any preceding claim.
